# EUROPEAN PATENT APPLICATION

(11) **EP 1 058 459 A2**
(43) Date of publication of application: **06.12.2000**
(21) Application number: 00111579.9
(22) Date of filing: 30.05.2000
(51) Int. Cl.: H04N 7/26, H04N 7/46, H04N 7/24

(54) **Video transmission method and remote monitoring system using it**

(30) Priority: 02.06.1999 JP 15465699
(71) Applicant: Hitachi, Ltd., Chiyoda-ku, Tokyo 101-8010 (JP)
(72) Inventor: Kameyama, Tatsuya, Hitachi, Ltd., Intel.Prop.Group, Chiyoda-ku, Tokyo 100-8220 (JP)
(74) Representative: Strehl Schübel-Hopf & Partner

(57) **Abstract**

Video images are coded using an MPEG system, and the codes are packetized by a packetizer as differentiated by the picture type. Packetized I pictures and P pictures are sent out in synchronism with video frames. Each B picture is sent out following the sending of an I picture or a P picture. Depending on the extent of congestion of a communication line on which the pictures are sent out, packets of B pictures which cannot be transmitted are discarded. Layered coding is also used for the coding of video images, and layers lower in priority of B pictures which cannot be transmitted are discarded.

## Description

### BACKGROUND OF THE INVENTION

### Field of the Invention

The present invention relates to a moving picture transmitting system and a moving picture transmitting/receiving apparatus, and more particularly to a moving picture transmitting system and a moving picture transmitting/receiving apparatus for coding video signals using MPEG codes and transmitting the coded video signals.

### Description of Related Art

The Japanese Published Unexamined Patent Application No. Hei 10-262245 proposes a method of remedy to cope with impossibility to transmit within a one-video frame period (e.g. 29.97 Hz), where video signals coded frame by frame are to be transmitted in video transmission over a packet-based network. The cited patent uses layered coding for video coding. Layered coding is a method by which a picture is divided into a higher layer of greater importance, which at least is required, and a lower layer of lesser importance, and coded in that layered state. According to the above-cited publication, when a one-frame equivalent of a coded picture cannot be transmitted within a one-video frame period, the quantity of transmission is controlled by discarding the layer of lesser importance out of the layer-coded picture . This method ensures regeneration of a picture synchronized with the video frame period.

Layered coding methods include ones of temporal scalability according to the MPEG2 specification (ITU-T H.262, ISO 13818-2), spatial scalability, SNR scalability, and data partitioning. The Japanese Published Unexamined Patent Application No. Hei 8-46960 describes a method of layered coding sub-band by sub-band, and the Japanese Published Unexamined Patent Application No. Hei 4-100494 describes a layered coding method by which the amount of video quality deterioration is calculated by utilizing DCT (discrete cosine transform) and bring the amount of video quality deterioration closer to its permissible limit.

Further, a remote monitoring system according to the prior art subjected a picture to compression coding on the camera side and coded signals were transmitted to the monitoring apparatus. Another method consisted of recording pictures with a VTR on the camera side and reproducing the VTR-recorded pictures offline.

### SUMMARY OF THE INVENTION

The above-described method according to the prior art involved the problem that, because transmission is accomplished in units of a one-video frame period each, the layer of lesser importance out of layer coded pictures is discarded unless transmission is completed within a one-video frame period. Or where coding utilizing an MPEG (Moving Picture Experts Group) standard is used, there is the problem of an increased probability of layer discarding on account of failure to complete transmission of a one-frame equivalent of codes within a one-video frame period.

The MPEG method codes video frames in three types of pictures: I (Intra-coded) pictures, P (Predictive-coded) pictures and B (Bidirectionally predictive-coded) pictures. As a P picture results from the coding of differences of past I pictures or P pictures, and a B picture derives from the coding of differences of preceding and following I pictures and P pictures, the quantitative relationship among I, P and B pictures is I picture > P picture > B picture . In particular, the code amount of an I picture is often five times as great as that of a B picture or even greater. If I, P and B pictures are transmitted at a bitrate representing the average of their respective totals, the transmission of an I picture is more likely to fail to be accomplished within a one-video frame period. By the conventional method, if a picture cannot be transmitted within a one-video frame period, the layer which fails to be transmitted is discarded. An I picture, in particular, is referenced from a P picture or a B picture. Accordingly, there is the problem that partial discarding of an I picture increases the video quality deterioration due to decoding on the receiving side.

According to the other of the above-described prior art method, a remote monitoring system codes pictures picked up by a camera, and transmits the coded pictures to a monitoring apparatus via a communication line. A fee is charged for the use of a communication line. The fee has so far been charged according to the duration of communication, but charging proportional to the information quantity (on a bit basis) is expected to become the mainstream in the future. Therefore, it is conceivable to save the line fee by increasing the compression ratio to reduce the amount of codes. Coding of pictures, as it usually applies a compression technique based on visual characteristics including the removal of high frequency components, involves the problem that raising the compression ratio would entail a greater loss of video information including high frequency components and a resultant deterioration in picture quality.

Any method for reducing picture quality deterioration should take into consideration a coding system which permits control of the amount of codes so that important picture elements be coded in a low compression ratio and others in a high compression ratio.

Coding methods for controlling the amount of codes (varying the compression ratio) include variable bitrate coding and trans-coding. Variable bitrate coding is a method for controlling the amount of codes to be outputted according the amount of codes demanded at the time of coding. Trans-coding is a method to re-code already coded data by a system different from the initial system of coding.

In variable bitrate coding or trans-coding, the amount of codes is controlled by varying coding parameters as demanded by the monitoring apparatus. However, the output of coding by any such method is fixed at the amount of codes to which it is controlled. Accordingly, there is a problem that, if pictures coded in the best quality are desired to be recorded on the part of the camera apparatus, a second encoder intended for storage will be required.

A first object of the present invention is to reduce the deterioration of picture quality which is invited, when coded pictures are transmitted, by an increase in jitters or the like ensuing from delays at the time of transmission or abrupt variations in the quantity of coding.

A second object of the invention is to reduce the probability for coded pictures, when coded pictures are transmitted, to be discarded.

A third object of the invention is to transmit a reduced data quantity of pictures coded by a single encoder and, at the same time, to realize storage of pictures of high quality without reducing the data quantity of coded pictures. It is also to transmit a reduced data quantity of coded pictures stored without using trans-coding.

A fourth object of the invention is to transmit to a monitoring apparatus a reduced data quantity of coded pictures stored in a camera apparatus and to regenerate them in high picture quality on the part of the monitoring apparatus.

In order to achieve the first object stated above, a transmission method utilizing the characteristics of picture coding by an MPEG system is used. A B picture, since it is coded by referencing I or P pictures both before and after it, is coded after the I or P pictures are coded. Therefore, a coded B picture is outputted after the outputting of the encoded following picture which was referenced. Where video frames 1, 2, 3, 4, 5, 6 and 7 successively inputted along the time axis are to be coded in a sequence of, for instance, I, B, B, P, B, B and I, the coded outputs of coding by the MPEG system come out in the sequence of 1, 4, 2, 3, 7, 5 and 6 in video frame number. As a B picture is coded after the coding of the following reference frame, it is always coded behind by an equivalent of two video frames. Therefore, there will be no problem if it is transmitted by the time of the decoding of the following reference frame. In this example, if I and P pictures are transmitted in synchronism with a three-video frame period, and the transmission of the B picture is completed within three periods, decoding on the receiving side can be normally accomplished.

In order to achieve the second object stated above, pictures are coded by utilizing layered coding. By layered coding, one video frame is divided into a plurality of layers. When a B picture cannot be transmitted in time, by discarding a layer of lesser priority in the layer coded B picture, a video frame can be generated from a layer of higher priority.

In order to achieve the third object stated above, pictures are coded utilizing layered coding.

A camera apparatus is enabled to adjust the quantity of data transmitted by subjecting pictures to layered coding, combining coded layers in a descending order of relative importance so as to provide codes in the amount demanded by the monitoring apparatus, and transmitting the combined layers.

By causing every layer of layered codes to be stored on the part of the camera apparatus simultaneously with transmission, the stored layers of pictures can be selectively transmitted on a later day upon request from the monitoring apparatus.

In order to achieve the fourth object stated above, layers received by the monitoring apparatus are stored. When a picture stored at the camera apparatus at the same time as the picture stored there is to be demanded, the quantity of communication can be reduced by demanding from the camera apparatus the difference between the layers stored at the monitoring apparatus and all the layers stored at the camera apparatus.

### BRIEF DESCRIPTION OF THE DRAWINGS

These and other objects, features and advantages of the present invention will become more apparent from the following detailed description of the preferred embodiments when taken in conjunction with the accompanying drawings, wherein:
Fig. 1 is a block diagram illustrating a first embodiment of the present invention.
Fig. 2 is a flowchart illustrating the operation of the first embodiment of the invention.
Fig. 3 is a time chart illustrating the operation of Fig. 1.
Fig. 4 is another time chart illustrating the operation of Fig. 1.
Fig. 5 is a block diagram illustrating a second embodiment of the invention.
Fig. 6 is a flowchart illustrating the operation of the camera apparatus of the second embodiment of the invention.
Fig. 7 is a flowchart illustrating the operation of the monitoring apparatus of the second embodiment of the invention.
Fig. 8 is a time chart illustrating layers to be transmitted in the second embodiment of the invention.
Fig. 9 is a time chart illustrating layers to be stored in the first storage of the second embodiment of the invention.
Fig. 10 is a time chart illustrating layers to be stored in the second storage of the second embodiment of the invention.

### DESCRIPTION OF PREFERRED EMBODIMENTS

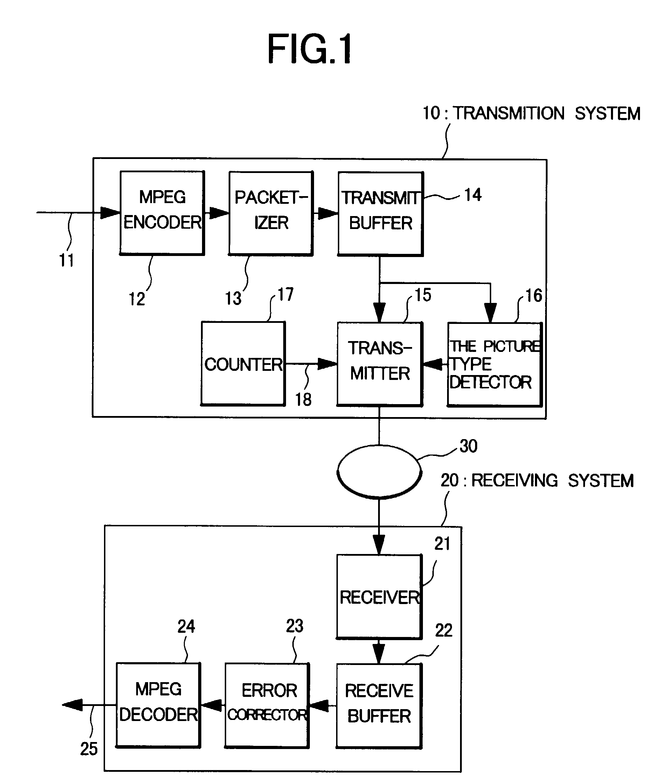

A first embodiment of the present invention will be described below with reference to Fig. 1.

The first embodiment of the invention performs coding by an MPEG system, individual frames being supposed to be reiteratively coded in the order of IBBPBB in picture type. This embodiment, of course, in no way restricts the order of picture types.

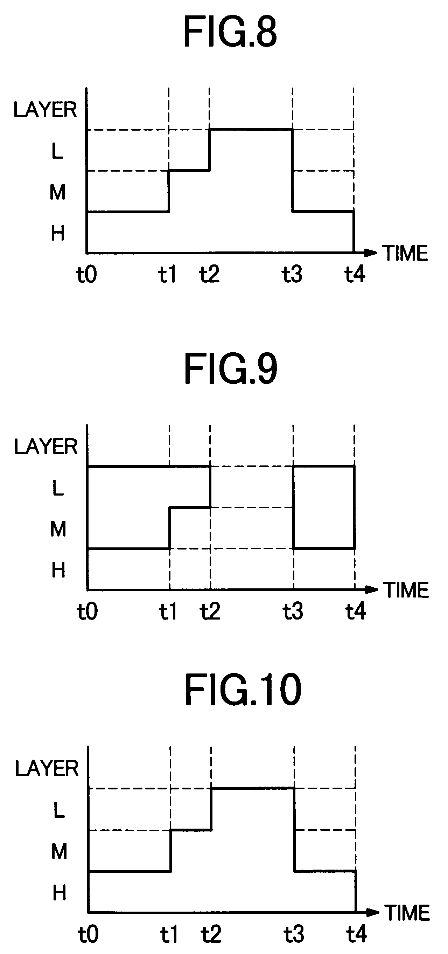

In Fig. 1, 10 denotes a transmission system; 11, video signals; 12, an MPEG encoder; 13, a packetizer; 14, a transmit buffer; 15, a transmitter; 16, a picture type detector; 17, a counter; 18, a synchronizing signal; 20, a receiving system; 21, a receiver; 22, a receive buffer; 23, an error corrector; 24, an MPEG decoder; 25, regenerated video signals; and 30, a communication line.

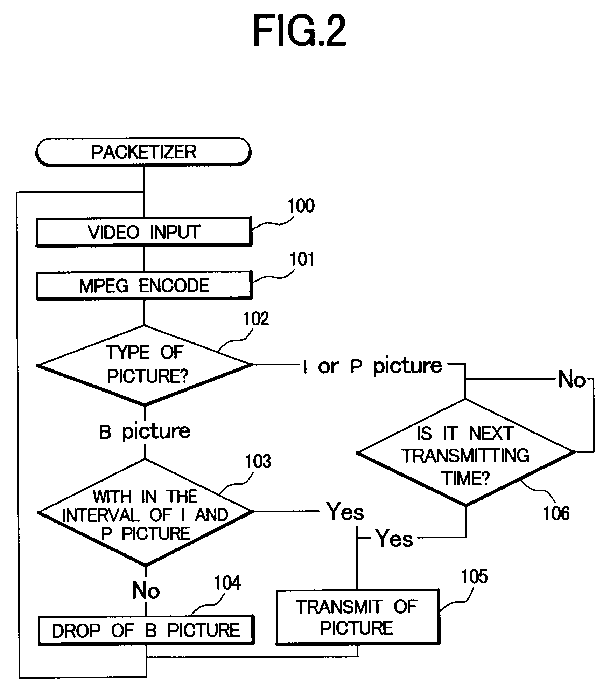

Next will be described the operation of each part of Fig. 1 with reference to the flowchart of Fig. 2.

The MPEG encoder 12, to which video signals 11 are inputted (100), outputs a stream coded by the MPEG system (101). The packetizer 13 divides by the picture type the stream outputted from the MPEG encoder 12 to accomplish packetization. The transmit buffer 14 temporarily stores the transmit packet, packetized by the packetizer 13, to adjust the timing of transmission. The picture type detector 16 detects the picture type of the transmit packet (102). The counter 17 outputs a synchronizing signal in every third period of a clock synchronized with video frames. The transmitter 15, if it is judged by the picture type detector 16 that the transmit packet to be transmitted is an I picture or a P picture, immediately transmits it (105) via the communication line 30 to the receiving system 20 in synchronism with a synchronizing signal 18 (106) outputted by the counter 17. If it is judged by the picture type detector 16 that the transmit packet to be transmitted is a B picture, it will be transmitted following the transmission of an I picture or a P picture (105) . Then it is checked whether the transmission time of the B picture will pass the timing of the next synchronizing signal 18 to be outputted by the counter 17 (103) and, if it will, its transmission is given up and the B picture is discarded (104).

The receiver 21 receives the packet transmitted by the transmitter 15. The receive buffer 22 stores the packet received by the receiver 21. The error corrector 23 checks the packet received by the receiver 21; if a B picture has been discarded, it inserts a copied B picture so that a similar picture to the video frame preceding the discarded B picture be regenerated; and outputs an MPEG coded stream. The MPEG decoder 24 decodes the MPEG coded stream restored by the error corrector 23, and outputs a regenerated video signal 25.

To add, this embodiment, in which an example of restoring method by the error corrector 23 is shown, in no way restricts the method for restoration.

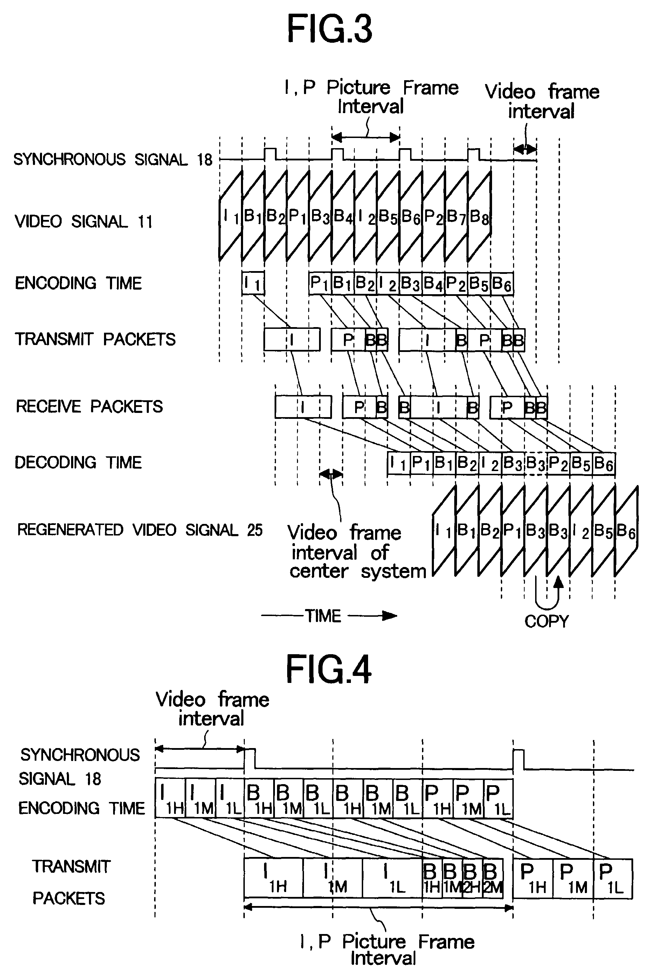

Next will be described the operation of Fig. 1 with reference to Fig. 3. Fig. 3 is a time chart illustrating the operation of a transmission system using the configuration of Fig. 1. This embodiment represents a case in which two B pictures are present between an I picture and a P picture . Of course, this in no way restricts the sequence of different picture types.

Video signals 11 are inputted at video frame intervals. The MPEG encoder 12, in coding the video signals 11 by the MPEG system, codes the first video frame as an I picture . Then, before coding the second and third video frames, it codes the fourth video frame as a P picture. Next, after the coding of the I picture and the P picture, it codes the second and third video frames as B pictures. This MPEG coding results in the coding of B pictures delayed by an equivalent of three video frames.

Each coded picture is transmitted as a transmit packet. I pictures and P pictures are transmitted in synchronism with a synchronizing signal 18. B pictures are transmitted following the transmission of an I picture or a P picture. On this occasion, the I picture or the P picture may contain large amounts of codes, and the duration of its transmission may span a plurality of video frame intervals. If the I picture or the P picture takes so long a time to transmit that the duration of B picture transmission passes the timing of the next synchronizing signal 18, that B picture is discarded but is not transmitted.

The receiving system 20 decodes each of the received pictures. On this occasion, the lacking B picture is regenerated free from errors by either copying the B picture immediately before the discarded B picture or generating and inserting a B picture with differences of 0 from the reference pictures before and after.

Fig. 4 is a time chart illustrating the operation of a transmission system using the configuration of Fig. 1 with layered coding added to the MPEG encoder 12. Layered coding in this embodiment divides each of the MPEG coded I, P and B pictures into three layers. Of these layers, the layer with the highest priority is denoted by H; that with a medium priority, by M; and that with the lowest priority, by L.

If the transmission of the B picture in a transmit packet is not completed by the next synchronizing signal 18, layers of that B picture are discarded and refrained from transmission in the ascending order of priority. Although this embodiment represents a case in which B1L and B2L are discarded, this in no way restricts the order of discarding: a layer or layers lower in priority of either an I picture or a P picture may as well be discarded.

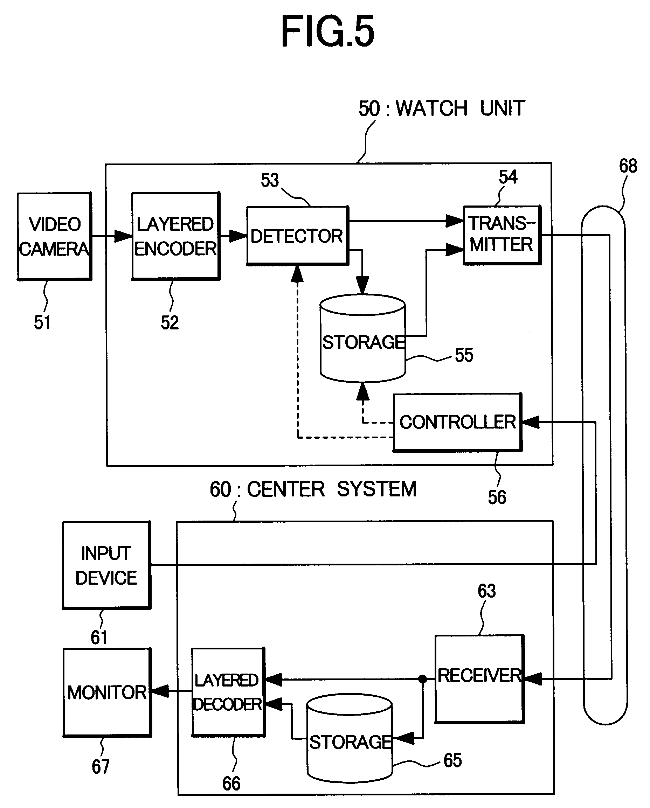

A second embodiment of the present invention will be described below with reference to Fig. 5.

In Fig. 5, 50 denotes a camera apparatus; 51, a video camera; 52, a layered encoder; 53, a selector; 54, a transmitter; 55, a first storage; 56, a controller; 68, communication line; 60, a monitoring apparatus; 61, an input device; 63, a receiver; 65, a second storage; 66, a layered decoder; and 67, a monitor.

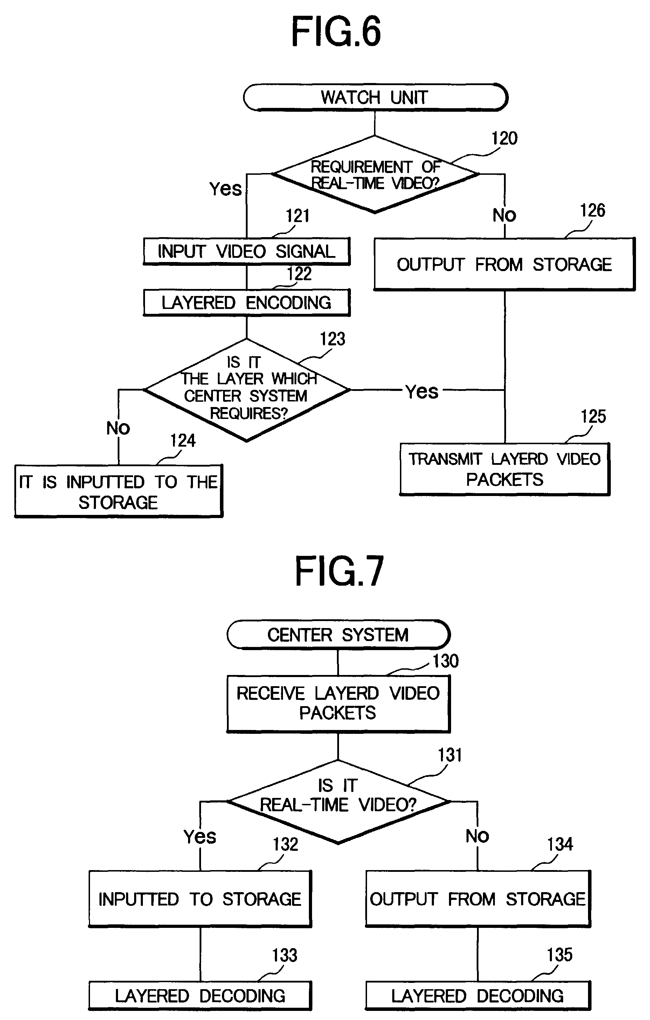

Next will be described the operation of each part of Fig. 5 with reference to the flowcharts of Figs. 6 and 7.

First will be described the operation of each part when a demand for a real-time video image picked up by the video camera 51 is made from the monitoring apparatus 60 to the camera apparatus 50 (120) (131). The layered encoder 52 inputs the image picked up by the video camera 51 (121) and subjects it to layered coding (122) . The selector 53 selects a layer in accordance with the demand inputted to the input device 61 of the monitoring apparatus 60 (123). The transmitter 54 transmits the layer, selected by the selector 53, via a communication line 68 to the monitoring apparatus 60 (125). The first storage stores other layers than the layer selected by the selector 53 (124).

In the monitoring apparatus 60, the receiver 63 receives the layer transmitted by the transmitter 54 (130). The second storage stores the received layers (132). The layered decoder subjects the received layers to layered decoding (133) and regenerates them on the monitor 67.

Next will be described the operation of each part when the monitoring apparatus 60 demands any of the stored video images from the camera apparatus 50.

The first storage 55 outputs the layers to be transmitted in accordance with the demand inputted to the input device 61 of the monitoring apparatus 60 (126). The transmitter transmits the layers outputted by the first storage 55 via the communication line 68 to the monitoring apparatus 60 (125).

In the monitoring apparatus 60, the receiver 63 receives the layers transmitted by the transmitter 54 (130). The second storage outputs stored layers of the same video frame as the video frame of the layers received by the receiver 63 (134). The layered decoder combines the received layers and the layers outputted by the second storage 65 to perform layered decoding (135) and regenerates the result on the monitor 67.

It is of course possible to use the transmission method described in connection with the first embodiment as the transmission method for this embodiment.

Fig. 8 , Fig. 9 and Fig. 10 are time charts illustrating the operation of the second embodiment of the present invention. In this embodiment, three kinds of layers (H, M and L) differentiated according to the relative importance are outputted by the layered encoder 52. To add, there is nothing to restrict the number of layers in this embodiment.

Fig. 8 illustrates the layers transmitted by the camera apparatus 50; Fig. 9, those stored in the first storage; and Fig. 10, those stored in the second storage.

In Fig. 8, the camera apparatus 50, upon demand from the monitoring apparatus 60, transmits the layer H from time t0 till time t1; the layers H and M from time t1 till t2; the layers H, M and L from time t2 till t3; and the layer H from time t3 till t4.

In Fig. 9, the first storage stores the layers M and L from time t0 till time t1; the layer L from time t1 till time t2; and the layers M and L from time t3 till time t4.

In Fig. 10, the second storage stores the layer H from time t0 till time t1; the layers H and M from time t1 till time t2; the layers H, M and L from time t2 till time t3; and the layer H from time t3 till time t4.

The monitoring apparatus can regenerate images of higher quality by receiving the remaining layers stored in the second storage shown in Fig. 10 and the layers stored in the first storage shown in Fig. 9.

According to the present invention, as the timing of transmission is synchronized with the coding of an I or a P picture, there is the effect of a reduction in transmit buffer on the transmitting side.

On the receiving side, decoding is usually stabilized by increasing the receive buffer when transmission is accomplished asynchronously on the sending side. Where the transmitting time is to be synchronized with the coding time, as coded data are received in synchronism with the coding time without fail, there is the effect of making possible a reduction in receive buffer.

In MPEG coding, the amounts of codes of individual frames are not uniform, and especially, the code amount of an I picture is often five times as great as that of a B picture or even greater. Furthermore, I pictures are important video frames, which are referenced by P pictures or B pictures. Therefore, the time available for transmission should be long enough to allow each I picture to be transmitted completely, and there is the effect that the transmission of each I picture can be accomplished without fail by timing the transmission of the B picture after the transmission of the I picture. Moreover, there is the further effect that, when a B picture cannot be transmitted by the transmission time of the next P picture or I picture, it need not be transmitted but decoding can still be continued even though the video frame of the B picture would be missing.

Furthermore the use of layered coding provides the effect that, when there is no sufficient time for the transmission of a B picture, the image can be regenerated on the decoding side with a reduced deterioration of picture quality by partially discarding a layer of low priority.

Further according to the invention, as the quantity of video information to be transmitted can be controlled at the discretion of the receiving party, there is the effect of saving the fee for communication line use. There is the further effect that, for instance, where an ISDN line is used, coded video images are transmitted by using one 64 Kbps line at normal times, while two lines are used in an emergency to transmit images of high quality.

There also is the effect of enabling real-time transmission of video images to the monitoring apparatus with the amount of coding kept under control and the recording of all video images on the part of the camera apparatus to be accomplished at the same time without using a plurality of encoder.

There is the further effect of enabling real-time transmission of video images to the monitoring apparatus with the amount of coding kept under control and the transmission of video images to the monitoring apparatus with the amount of coding of stored video images kept under control to be accomplished at the same time without using a plurality of encoder.

Further by causing the camera apparatus to transmit other layers than those that have been once received, there is the effect of saving the cost of communication.

While the present invention has been described above with reference to the preferred embodiments, any person of ordinary skill in the art would be enabled by this disclosure to make various modifications of these embodiments and still be within the scope and spirit of the invention as defined in the appended claims.

## Claims

1. A moving picture transmission method wherein, out of an I (Intra-coded) picture and a P (Predictive-coded) picture in an MPEG (Moving Picture Experts Group) system, the I picture is transmitted first in synchronism with the video frame period of the P picture, and a B (Bidirectionally predictive-coded) picture is transmitted if it can be transmitted within the video frame period of the I picture and the P picture.

2. A moving picture transmission method, as stated in Claim 1, wherein said I picture, said P picture and said B picture are subjected to layered coding, and the pictures having undergone layered coding are transmitted in an order giving priority to layers greater in importance.

3. A moving picture transmission method wherein:
video images are coded using an MPEG system,
said coded video images are packetized as differentiated by the picture type,
said packetized I pictures and P pictures are sent out in synchronism with video frames, and
each B picture is transmitted if it can be transmitted within said video frame, or discarded if it cannot be transmitted within said video frame.

4. A camera apparatus comprising:
a encoder for subjecting video images inputted from a video camera to layered coding into a plurality of layers,
a storage for storing said plurality of layers, and
a means for selecting at a demand from a monitoring apparatus either video images subjected to layered coding by said encoder or layers of video images, having undergone layered coding, stored in said storage, and transmitting them to said monitoring apparatus.

5. A camera apparatus, as stated in Claim 4, wherein the means for transmission to said monitoring apparatus selects differential layers between the layers stored in said monitoring apparatus and layers stored in said storage, and transmit them to said monitoring apparatus.

6. A monitoring apparatus, connected to a camera apparatus having a encoder for subjecting video images inputted from a video camera to layered coding into a plurality of layers, a first storage for storing said plurality of layers, and a means for transmitting video images coded by said encoder, for decoding and regenerating coded images transmitted from said camera apparatus, wherein:
it is provided with a second storage for storing layers received from said camera apparatus, and
it demands from said camera apparatus to transmit differential layers between the layers stored in said second storage and layers stored in said first storage, and transmit them to said monitoring apparatus.
